# FASCICULE DE BREVET EUROPEEN

(11) **EP 0 513 302 B1**
(45) Date de publication et mention de la délivrance du brevet: **02.11.1994**
(21) Numéro de dépôt: 92900389.5
(22) Date de dépôt: 19.11.1991
(51) Int. Cl.: B01D 53/34

(54) **PROCEDE DE DESULFURATION DE GAZ DE COMBUSTION**
VERFAHREN ZUR RAUCHGASENTSCHWEFELUNG
COMBUSTION GAS DESULFURIZATION METHOD

(30) Priorité: 27.11.1990 FR 9014918
(43) Date de publication de la demande: 19.11.1992
(73) Titulaire: INSTITUT FRANCAIS DU PETROLE, 92502 Rueil-Malmaison (FR); BABCOCK ENTREPRISE, 93123 La Courneuve (FR)
(72) Inventeur: MARTIN, Gérard, F-92500 Rueil-Malmaison (FR); BOUJU, Jean-Louis, F-95270 Luzarches (FR)
(86) Numéro de dépôt international: FR9100914
(87) Numéro de publication internationale: WO9209356

(56) Documents cités:
- EP-A- 0 204 193
- WO-A-89/09366
- DE-A- 1 526 127
- US-A- 4 909 161

## Description

L'invention a pour objet un procédé de désulfuration de gaz de combustion.

Les réglementations sévères limitant dans de nombreux pays et de nombreuses régions les émissions d'oxydes de soufre par les effluents gazeux des générateurs de chaleur y interdisent l'emploi de combustibles à haute teneur en soufre, qui, par ailleurs, peuvent présenter des avantages économiques certains : il en est ainsi de certains charbons s'apparentant aux lignites, et de résidus pétroliers issus des procédés de raffinage.

Il est connu selon le brevet français FR-A-2.609.150 de réduire les émissions d'oxydes de soufre et particulièrement celles de dioxyde de soufre provenant d'un générateur de chaleur acceptant des combustibles à haute teneur en soufre. Selon ce procédé, un agent de désulfuration en poudre est injecté dans les gaz de combustion et l'on fait circuler le mélange résultant dans une zone de désulfuration, puis on sépare les gaz au moins partiellement désulfurés de l'agent de désulfuration en poudre qui peut être recyclé ou rejeté.

Un procédé analogue est décrit dans FR-A-2 636 720. Dans cette demande de brevet, le mélange des particules d'agent désulfurant avec les gaz de combustion s'effectue dans une zone de turbulence située en amont de la zone de désulfuration.

Dans ce type de désulfuration, le taux d'utilisation d'absorbants calciques ou magnésiens tels que oxydes et carbonates de calcium et de magnésium demeure limite. La cause de ce phénomène n'a pas été élucidée complètement, mais il semble qu'il se forme à la surface des grains une croûte qui empêche partiellement l'accès des réactifs à l'intérieur de ces grains.

On a découvert un procédé permettant de remédier aux inconvénients ci-dessus et en particulier permettant d'obtenir des vitesses de désulfuration élevées, et d'accroître le taux d'utilisation de l'absorbant, à un coût moindre.

De manière plus précise, on a découvert un procédé de désulfuration de gaz de combustion dans lequel on injecte un agent de désulfuration en grains dans un courant de gaz de combustion, caractérisé en ce que :
(a) on fractionne le gaz de combustion en au moins deux courants,
(b) on ajoute de l'agent désulfurant en grains à chacun des courants,
(c) on dirige les courants résultants chargés de grains l'un vers l'autre, de manière à provoquer leur rencontre et leur mélange.
(d) on évacue le mélange résultant de gaz et de particules solides,
(e) on fractionne le mélange évacué de (d) en au moins deux courants,
(f) on dirige à nouveau les courants résultants l'un vers l'autre, de manière à provoquer leur rencontre et leur mélange, et
(g) on sépare les gaz désulfurés des particules solides.

Après séparation, les particules peuvent être recyclées si elles possèdent encore un pouvoir désulfurant suffisant, mais cela n'est pas toujours nécessaire en raison de l'amélioration du taux d'utilisation par passe obtenu selon l'invention.

Les particules ont habituellement une granulométrie de 1 à 100 micromètres, de préférence 2 à 25 micromètres, et une masse volumique de 500 à 4000 kg/m3.

La température de désulfuration, c'est-à-dire la température obtenue après mélange des gaz avec l'absorbant peut être choisie entre 700 et 1100^{o}C.

Un élément important concerne la vitesse de la suspension de gaz et de particules. Cette vitesse est avantageusement de 10 à 80 m/s, de préférence 20 à 30 m/s. Ces vitesses conduisent à des niveaux de turbulence suffisamment élevés pour assurer un mélange homogène de l'absorbant dans les fumées et obtenir ainsi des taux d'utilisation de l'absorbant élevés.

La concentration de particules dans le gaz peut être, par exemple, de 0,02 à 1 kg/Nm3, de préférence de 0,05 à 0,2 kg/Nm3.

Selon un mode de réalisation préféré, on injecte des particules additionnelles d'agent désulfurant aux courants de l'étape (f) et on évacue le mélange résultant de gaz et de particules dans une direction sensiblement perpendiculaire à celle desdits courants. Ensuite on procède à l'étape (g).

Il est clair que l'évacuation des gaz à chaque stade du procédé où une telle évacuation est prévue se fait dans le sens normal d'écoulement des gaz de combustion, c'est-à-dire de la zone de combustion vers la zone de décharge des gaz du procédé.

Après l'étape (f), on peut avantageusement laisser la suspension de particules dans le gaz s'écouler dans une zone en aval, non-conforme aux caractéristiques ci-dessus, par exemple dans une zone de section circulaire ou carrée, pouvant si nécessaire comporter des éléments modifiant le sens d'écoulement de la suspension, avant de procéder au traitement de séparation de l'étape (g). Le temps de séjour dans cette zone en aval peut être, par exemple, de 0,1 à 2 s, de préférence 0,5 à 1 s.

De préférence le mélange des particules avec le gaz (étape b) se fait en injectant dans les courants de gaz de combustion une suspension préformée de particules solides dans un courant de gaz auxiliaire, qui peut lui-même être du gaz de combustion ou du gaz recyclé.

Dans ce cas, la vitesse d'injection de la suspension préformée peut être, par exemple, de 20 à 150 mis, de préférence de 50 à 100 m/s.

En cas de recyclage des particules, on peut soit recycler les particules telles quelles, soit les soumettre à un traitement connu de séparation d'éléments indésirables tels que le sulfate de calcium ou de magnésium, ou à un traitement qui régénère l'absorbant, c'est-à-dire qui augmente la surface spécifique de l'absorbant partiellement sulfaté.

On peut introduire de l'ammoniac ou de l'urée dans la chambre de désulfuration, de préférence en amont, pour achever si nécessaire la dénitrification des effluents de combustion. De même, on peut rajouter de l'air pour que la désulfuration soit effectuée en atmosphère d'oxygène, si l'étape de combustion n'est pas réalisée en excès d'air.

Les absorbants les plus fréquemment utilisés sont les oxydes, hydroxydes et carbonates de métaux alcalino-terreux, par exemple les calcaires (CaCO3), les chaux éteintes (Ca(OH)2) ou les dolomies (CaMg(CO3)2). On pourra également utiliser des produits de cimenterie de fine granulométrie pris avant leur cuisson.

Ils peuvent être injectés dans un courant de gaz tel que l'air ou la vapeur d'eau ou comme suspension dans un liquide tel que l'eau.

Des venturis ou autres dispositifs favorisant une turbulence supplémentaire peuvent être utilisés dans l'axe des injecteurs 7 et 8, comme indiqué dans FR-A-2 636 720.

L'invention sera mieux comprise et ses avantages apparaîtront plus clairement à la lecture de la description qui suit d'un exemple particulier, nullement limitatif, illustré par les figures ci-annexées :
- la figure 1 représente en coupe longitudinale un dispositif selon l'invention, et
- les figures 2 et 3 représentent en coupe transversale deux variantes de réalisation du dispositif selon l'invention.

Cette figure représente un dispositif comportant une chambre de combustion (1) allongée, de section carrée ou rectangulaire, de préférence horizontale, pouvant brûler n'importe quel type de combustible solide ou liquide contenant du soufre et éventuellement de l'azote, injecté sous forme pulvérisée dans la chambre (1) par un brûleur (2) qui reçoit également un gaz comburant tel que l'air. Ce brûleur est avantageusement disposé selon l'axe de la chambre et à la partie inférieure de celle-ci. Au lieu d'un seul brûleur on peut utiliser une pluralité de brûleurs.

Le combustible peut être par exemple un résidu sous vide, un asphalte fluxé, un combustible solide, un combustible composite fuel/charbon ou une suspension charbon/eau.

De préférence le combustible est brûlé sans excès d'air ou avec un très faible excès d'air, afin de réduire au maximum la formation d'oxydes d'azote.

Au cours de la combustion, on prélève avantageusement une partie de l'énergie libérée par des tubes d'échange tels que (3) afin que la température des effluents gazeux de combustion se situe entre 700^{o}C et 1200^{o}C. Ces derniers quittent la chambre (1) par deux passages (4 et 5) délimités par une plaque (6) puis sont renvoyés l'un vers l'autre au niveau XX' après avoir reçu des particules solides provenant des injecteurs (7 et 8). La connexion des injecteurs à la source de particules solides n'a pas été représentée.

Lors de la rencontre des 2 courants opposés, dans la zone (9), il se produit un brassage intense favorable à une répartition homogène des particules sur l'ensemble des effluents.

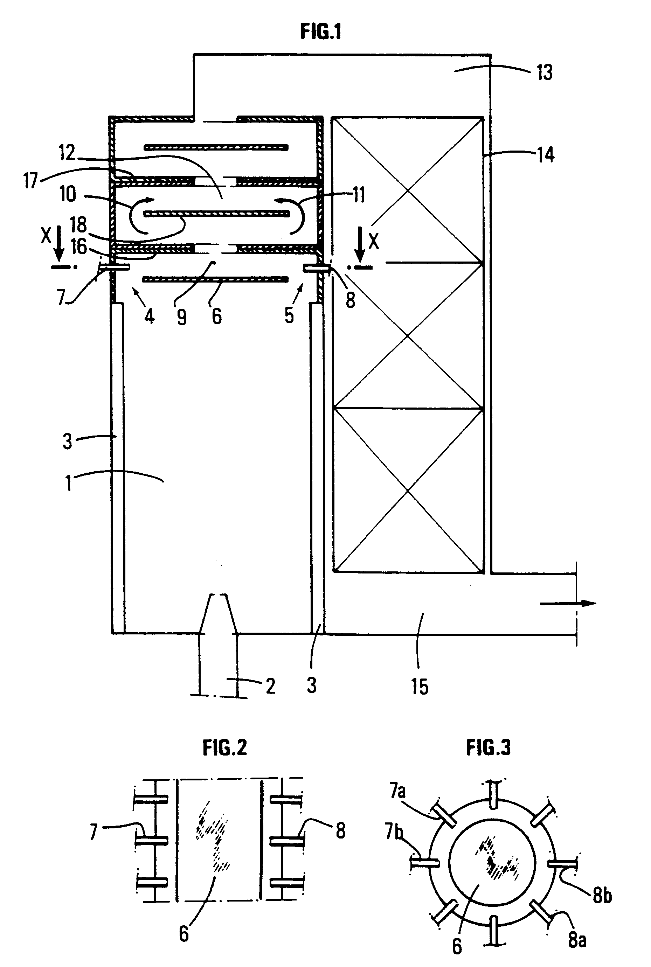

La suspension de particules quitte la zone (9) dans une direction sensiblement perpendiculaire à celle des courants de suspension au niveau XX', en passant par le(s) passage(s) ménagé(s) dans les plaques ou panneaux (16). On sépare à nouveau la suspension en 2 courants opposés (10 et 11) qui reviennent se frapper dans la zone (12). Ceci peut être renouvelé encore une fois comme indiqué sur la figure 1, ou davantage. Des plaques ou panneaux (17) comportant des passages pour la suspension séparent chaque étage, et des plaques telles que (18) permettent la séparation des courants. La suspension de particules dans le gaz passe ensuite dans la zone (13), où la désulfuration peut se poursuivre, et ensuite au contact des tubes ou plaques d'une chaudière de récupération de chaleur (14). La suspension est déchargée par la ligne (15). On peut ensuite séparer les particules solides du gaz, comme représenté sur la figure de FR-A-2 636 720.

Les particules récupérées peuvent être renvoyées pour partie aux injecteurs (7) et (8).

Selon la figure 2 qui constitue une coupe de la figure 1 selon XX', on retrouve les injecteurs (7 et 8) et la plaque déflectrice (6).

La chaudière peut aussi être de section circulaire. Dans ce cas (figure 3) on peut disposer une série d'injecteurs tels que 7a, 7b,... opposés aux injecteurs 8a, 8b,... La plaque peut alors être circulaire.

## Revendications

1. Procédé de désulfuration de gaz de combustion, dans lequel on injecte un agent de désulfuration en grains dans un courant de gaz de combustion, caractérisé en ce que :
a) on fractionne le gaz de combustion en au moins deux courants,
b) on ajoute de l'agent désulfurant en grains à chacun des courants,
c) on dirige les courants résultants de (b) l'un vers l'autre, de manière à provoquer leur rencontre et leur mélange,
d) on évacue le mélange résultant de gaz et de particules solides,
e) on fractionne le mélange évacué en au moins deux courants formés chacun de gaz et de particules solides,
f) on dirige les courants résultant de (e) l'un vers l'autre, de manière à provoquer leur rencontre et leur mélange, et
g) on fractionne le mélange résultant de (f) en un gaz au moins partiellement désulfuré et en particules solides enrichies en soufre.

2. Procédé selon la revendication 1, dans lequel les grains d'agent désulfurant ont une granulométrie de 1 à 100 micromètres.

3. Procédé selon la revendication 1, dans lequel les grains d'agent désulfurant ont une granulométrie de 2 à 25 micromètres.

4. Procédé selon l'une des revendications 1 à 3, dans lequel les courants, lors de la rencontre de (c), ont une vitesse de 10 à 80 m/s.

5. Procédé selon l'une des revendications 1 à 4, dans lequel on répète plusieurs fois les étapes (e) et (f).

6. Procédé selon l'une des revendications 1 à 5, dans lequel de l'agent désulfurant en grains est ajouté aussi aux courants de l'étape (f).

7. Procédé selon l'une des revendications 1 à 6, dans lequel le mélange de l'agent désulfurant avec chacun des courants, à l'étape (b), se fait en injectant dans chacun des courants de gaz de combustion une suspension préformée de grains dudit agent désulfurant dans un courant de gaz auxiliaire, ladite suspension étant injectée à une vitesse de 50 à 100 m/s.

## Claims

1. A process for the desulphurisation of combustion gas, in which a granular desulphurising agent is injected into a combustion gas flow, characterised in that:
a) the combustion gas is split into at least two flows,
b) the granular desulphurising agent is added to each of the flows,
c) the flows resulting from step (b) are directed towards each other so that they meet and mix,
d) the resulting mixture of gas and solid particles is discharged,
e) the discharged mixture is split into at least two flows, each comprising gas and solid particles,
f) the flows resulting from step (e) are directed towards each other so that they meet and mix, and
g) the mixture resulting from step (f) is split into an at least partially desulphurised gas and solid particles enriched with sulphur.

2. A process in accordance with claim 1, in which the grains of the desulphurising agent are of a size between 1 and 100 micrometres.

3. A process in accordance with claim 1, in which the grains of the desulphurising agent are of a size between 2 and 25 micrometres.

4. A process in accordance with one of claims 1 to 3, in which the flows meet during step (c) at a speed of 10 to 80 m/s.

5. A process in accordance with one of claims 1 to 4, in which steps (e) and (f) are repeated several times.

6. A process in accordance with one of claims 1 to 5, in which the granular desulphurising agent is also added to the flows in step (f).

7. A process in accordance with one of claims 1 to 6, in which the desulphurising agent is mixed with each of the flows in step (b) by injecting into each of the combustion gas flows a pre-prepared suspension of grains of the desulphurising agent in a flow of auxiliary gas, this suspension being injected at a speed of 50 to 100 m/s.

## Patentansprüche

1. Verfahren zur Rauchgasentschwefelung, bei dem man ein Entschwefelungsmittel als Körner in einen Verbrennungsgasstrom injiziert, dadurch gekennzeichnet, daß
a) man das Verbrennungsgas in wenigstens zwei Ströme fraktioniert,
b) man Entschwefelungsmittel in Form von Körnern jedem der Ströme zusetzt,
c) die resultierenden Ströme aus (b) gegeneinander derart richtet, daß ihr Aufeinandertreffen und ihre Mischung hervorgerufen werden,
d) man das resultierende Gasgemisch und die Feststoffpartikel abzieht,
e) man das abgezogene Gemisch in wenigstens zwei Ströme fraktioniert, die aus Gas und festen Partikeln gebildet sind,
f) man die aus (e) stammenden Ströme gegeneinander derart richtet, daß ihr Aufeinandertreffen und ihre Mischung hervorgerufen werden und
g) man das aus (f) stammende Gemisch in ein wenigstens zum Teil entschwefeltes Gas und in mit Schwefel angereicherte Partikel fraktioniert.

2. Verfahren nach Anspruch 1, bei dem die Entschwefelungsmittelkörner eine Granulometrie von 1 bis 100 µm haben.

3. Verfahren nach Anspruch 1, bei dem die Entschwefelungsmittelkörner eine Granulometrie von 2 bis 25 µm haben.

4. Verfahren nach einem der Ansprüche 1 bis 3, bei dem die Ströme bei ihrem Aufeinandertreffen bei (c) eine Geschwindigkeit von 10 bis 80 m/s haben.

5. Verfahren nach einem der Ansprüche 1 bis 4, bei dem man mehrmals die Stufen (e) und (f) wiederholt.

6. Verfahren nach einem der Ansprüche 1 bis 5, bei dem Entschwefelungsmittel in Körnerform auch den Strömen der Stufe (f) zugesetzt wird.

7. Verfahren nach einem der Ansprüche 1 bis 6, bei dem das Gemisch des Entschwefelungsmittels mit jedem der Ströme in der Stufe (b) erfolgt, indem man in jeden der Ströme Verbrennungsgas in Suspension injiziert, das aus Körnern dieses Entschwefelungsmittels in einem Hilfsgasstrom vorgeformt wurde, wobei diese Suspension bei einer Geschwindigkeit von 50 bis 100 m/s injiziert wird.
